(19) Europäisches Patentamt
European Patent Office
Office européen des brevets

(11) **EP 1 833 257 A1**

(12) **EUROPEAN PATENT APPLICATION**

(43) Date of publication:
**12.09.2007 Bulletin 2007/37**

(51) Int Cl.:
*H04N 7/26* (2006.01)   *H04N 7/50* (2006.01)

(21) Application number: **06300201.8**

(22) Date of filing: **06.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Thomson Licensing
92100 Boulogne-Billancourt (FR)**

(72) Inventors:
• **Zhu, Li Hua,
8F, Bldg. A
Hai Dian District,
100085, Beijing (CN)**

• **Xu, Long,
Rm 8-9, 8F, Bldg. A
Hai Dian District,
100085, Beijing (CN)**
• **Chen, Zhi Bo,
8F, Bldg. A
Hai Dian District,
100085, Beijing (CN)**

(74) Representative: **Hartnack, Wolfgang
Deutsche Thomson-Brandt GmbH
European Patent Operations
Karl-Wiechert-Allee 74
30625 Hannover (DE)**

(54) **Method and apparatus for bit rate control in scalable video signal encoding using a Rate-Distortion optimisation**

(57)    In many video encoding bit rate control models such as TMN8 and RHO domain, the distortion D has been described as a uniform weighted distortion. According to the invention an approximated but still easy-to-use Laplacian distribution model is calculated for the quantisation step size adaptation in the macroblock layer bit rate control. The inventive bit rate control uses a pre-analysis step (LPPREA, HPPREA) that calculates the standard deviation of the input signal amplitudes in each macroblock in a Group of Frames. Using the corresponding standard deviation value determined in the pre-analysis step, in a motion estimation/compensation step (CQPEMB) the best mode for the P and B pictures and the actual standard deviation of the prediction residual for the macroblocks are obtained, whereby a rate distortion optimisation processing using the Laplace distribution is performed. For I frames an intra prediction is carried out by which the best prediction mode and the actual standard deviation of the prediction residual for the macroblocks are obtained, and a rate distortion optimisation processing using the Laplace distribution is performed. Thereby for I and P frames the quantisation parameter for each macroblock is obtained and used in a corresponding quantisation that follows transform (TRF1) of the prediction or motion estimation/compensation residual. For the B frames the bit rate control is carried out once again in an actual coding step, i.e. the quantisation parameter for a current macroblock is computed with the inventive improved TMN8 bit rate control using the best mode and the actual standard deviation obtained from the ME/MC stage.

Fig.4

**Description**

The invention relates to a method and to an apparatus for bit rate control in scalable video signal encoding using a Rate-Distortion bit rate control model, the pictures of which video signal are divided into a grid of pixel blocks, wherein the pixels in a block are transformed, quantised, inverse quantised and inverse transformed, and wherein the picture encoding types include intra coding, predictive coding and bi-directional predictive coding.

Background

In many video encoding bit rate control models such as TMN8 and RHO domain, the distortion $D$ (i.e. the encoding/decoding error for a pixel block caused by quantisation) has been described as a uniform weighted distortion, and therefore the distortion in each macroblock (MB) is introduced by uniformly quantising its DCT transform coefficients with a quantiser of step size Qstep.
The TMN8 rate control uses a frame-layer rate control to select a target number of bits for the current frame, and a macroblock-layer rate control to select the values of the quantisation step sizes for the macroblocks in that frame. In the frame-layer rate control a target number B of bits for the current frame is determined by:

$$B = R/F - \Delta$$

$$\Delta = \begin{cases} W/F, & W > Z*M \\ W-Z*M & \text{otherwise} \end{cases}$$

$$W = \max(W_{prev}+B_{prev}-R/F, 0),$$

wherein $B$ is the target number of bits for a frame (including the bits for quantised transform coefficients, motion vectors and header information), $R$ is the channel rate in bits per second, $F$ is the frame rate in frames per second, $W$ is the number of bits in the encoder buffer, $Z = 0.1$ is set as a default value to achieve a low delay, $M$ is a maximum value indicating buffer fullness that is set by default to $R/F$, $W_{prev}$ is the previous number of bits in the encoder buffer, and $B_{prev}$ is the actual number of bits used for encoding the previous frame.
The frame target bit rate $B$ varies depending on the type of video frame, e.g. I, P or B, on the buffer fullness and on the channel throughput. If W is greater than 10% of $M$, $B$ is slightly decreased. Otherwise, $B$ is slightly increased.
The macroblock-layer rate control selects the values of the quantisation step sizes $Q_{step}$ for all the macroblocks in a current frame so that the sum of the bits used for these macroblocks is close to the frame target bit rate $B$.
MPEG2 and MPEG4 support 31 different values of $Q_{step}$. In MPEG4 AVC a total of 52 $Q_{step}$ values are supported by the standard and these are indexed by a quantisation parameter value QP. $Q_{step}$ doubles in size for every increment of '6' in QP, and $Q_{step}$ increases by 12.5% for each increment of '1' in QP. Anyway, the different $Q_{step}$ values have the same properties for the quantisation.
The TMN8 rate control is described in ITU-T, Video codec Test model, near-term, version 8 (TMN8), H.263 AdHoc Group, Portland, June 1997, and in J.Ribas-Corbera, S.Lei, "Rate Control in DCT Video Coding for Low-Delay Communications", IEEE Trans. on CSVT, Vol.9, No.1, February 1999.
Using the scalable extension (SVC) of H.264/MPEG-4 AVC achieves a significantly higher peak signal-to-noise ratio (PSNR) than any other traditional hybrid video coding standard based on DCT, but no efficient bit rate control has been proposed up to now. Usually, rate control for SVC is carried out using a full search for selecting a suitable quantisation parameter (QP).

Invention

However, such processing is very inefficient and time-consuming. Besides, the current picture content of an MB and an optimised mode selection carried out by rate-distortion optimisation (RDO) is not considered.
A problem to be solved by the invention is to provide an improved bit rate control for scalable video coding. This problem is solved by the method disclosed in claim 1. A corresponding video signal and storage medium are disclosed in claims 7 and 8, respectively. An apparatus that utilises this method is disclosed in claim 2.

According to the invention, an efficient bit rate control processing for (e.g. temporally) scalable video coding SVC is disclosed for the Joint Scalable Video Model (JSVM, see the Main results of the MPEG Nice meeting in October 2005), which is based on the TMN8 model but introduces a new distortion model (i.e. the distortion resulting from the encoding/decoding error for a pixel block or macroblock MB caused by quantisation), and which bit rate control can also be used in other state-of-the-art hybrid coding systems. This improved rate control is based on a Laplace distribution which fits to the real distribution of the DCT transform coefficient magnitudes more efficiently than any other distribution model. A 16*16 macroblock may contain several (e.g. 4 four) luminance and chrominance blocks.

Firstly, the inventive bit rate control performs a pre-analysis step or stage that calculates the standard deviation of each residual block of the difference frame for an inter-coded frame or an intra-coded frame.
Note that, because the DCT is an orthogonal transform, the standard deviation of a block of DCT coefficients is also the standard deviation of the corresponding time domain block of pixels, and the standard deviation of a residual block of DCT coefficients is also the standard deviation of the corresponding time domain residual block of pixels from the time domain difference frame.

Secondly, with the corresponding standard deviation information determined in the pre-analysis step or stage, a motion estimation/compensation (ME/MC) step or stage is implemented, and then the best mode for the P and B pictures and the actual standard deviation of the prediction residual for all MBs are obtained, whereby a rate distortion optimisation processing (RDO) on MB basis using the distortion model from Laplace distribution is performed.
For I frames, in coding systems like MPEG-4 AVC an intra prediction is carried out by which the best prediction mode and the actual standard deviation of the prediction residual for the MBs are obtained, and a rate distortion optimisation processing (RDO) on MB basis using the Laplace distribution is performed.
Thereby for I and P frames the QP for each MB is obtained and used in a corresponding quantisation that follows transform of the prediction or motion estimation/compensation residual.

Lastly, for the B frames the bit rate control is carried out once again (i.e. a two-pass QP determination) in an actual coding step or stage, where the RDO on MB basis is used and therefore the best reference frame, motion vector (MV) and MB mode as well as the actual standard deviation of that MB can be obtained. Subsequently, with the actual standard deviation of the MB, the final QP which is provided for the transform and quantisation and entropy coding in the last coding stage is calculated, using the inventive improved TMN8 bit rate control.

For intra-coded pictures the standard deviation for each (intra-predicted) MB can be obtained from the current intra-coded picture individually, whereas for inter-coded P pictures and for hierarchically coded B pictures (i.e. the high-pass subbands) the macroblock-based motion estimation and compensation is implemented between the current frame and its reference frame or frames, and thereafter the $\sigma^2$ for each MB of the residual texture can be obtained.
It should be pointed out that the QPs of inter-coded pictures and hierarchically coded B pictures can just be taken as the QP for the RDO in the actual motion estimation and mode decision stage.

The inventive processing can be used in any rate control for spatio-temporally (excluding signal-to-noise ratio (SNR) scalability) scalable video coding systems that use a coding structure similar to that of MPEG4 AVC SVC (ISO/IEC 14496-10, Advanced Video Coding).
The inventive bit rate control is more accurate than other rate controls. It achieves a better and smoother picture quality and it can be realised easily in practical applications and it is of low complexity.

In principle, the inventive method is suited for bit rate control for a scalable video signal encoding using a Rate-Distortion optimisation for said bit rate control, the pictures of which video signal are divided into a grid of pixel macroblocks, wherein the pixels in a macroblock are transformed, quantised, inverse quantised and inverse transformed, and wherein the picture encoding types include bi-directionally predictively coded and intra coded and/or predictively coded, in which method the following steps are carried out for a current group of pictures of said video signal:

- pre-analysing pixel macroblocks in said current group of pictures of said video signal by calculating their standard deviation values;
- for predictively coding pictures, based on the corresponding standard deviation value, performing (CQPEMB) for each current macroblock a motion estimation and compensation and determining a best coding mode and a first quantisation parameter, thereby using a rate distortion optimisation processing and a distortion model from Laplace distribution model;
- for intra coding pictures, based on the corresponding standard deviation value of intra prediction mode, determining for each current macroblock the best intra prediction mode and a first quantisation parameter, thereby using a rate distortion optimisation processing and a distortion model from Laplace distribution model;
- by using said best coding mode or intra prediction mode, respectively, and said first quantisation parameter, transforming and quantising the corresponding motion compensation or prediction residual of said current macroblock and entropy encoding it;
- for bi-directionally predictively coding pictures:

-- based on the corresponding standard deviation value of intra prediction mode, calculating for each current macroblock a preliminary quantisation parameter using a distortion model from Laplace distribution model;

-- performing for said current macroblock a motion estimation/compensation using rate distortion optimisation processing with said preliminary quantisation parameter value, whereby an actual standard deviation value and a best coding mode is obtained for the macroblocks;

-- performing for said current macroblock a motion compensation using said best coding mode, and forming a residual macroblock;

-- based on said residual macroblock, calculating a second quantisation parameter using said actual standard deviation value and said distortion model from Laplace distribution model;

-- transforming said residual macroblock into the frequency domain and quantising it using said second quantisation parameter;

-- entropy coding the transformed and quantised residual macroblock.

In principle the inventive apparatus is suited for bit rate control for scalable video signal encoding using a Rate-Distortion optimisation for said bit rate control, the pictures of which video signal are divided into a grid of pixel macroblocks, wherein the pixels in a macroblock are transformed, quantised, inverse quantised and inverse transformed, and wherein the picture encoding types include bi-directionally predictively coded and intra coded and/or predictively coded, and wherein the processing is based on a current group of pictures of said video signal, said apparatus including:

- means being adapted for pre-analysing pixel macroblocks in said current group of pictures of said video signal by calculating their standard deviation values;

- means being adapted for performing for predictively coding pictures, based on the corresponding standard deviation value, for each current macroblock a motion estimation and compensation and for determining the best coding mode and a first quantisation parameter, thereby using a rate distortion optimisation processing and a distortion model from Laplace distribution model,
and being adapted for determining for intra coding (I) pictures, based on the corresponding standard deviation value of intra prediction mode, for each current macroblock the best intra prediction mode and a first quantisation parameter, thereby using a rate distortion optimisation processing and a distortion model from Laplace distribution model;

- means being adapted for transforming and quantising by said first quantisation parameter, using said best coding mode or intra prediction mode, respectively, the corresponding motion compensation or prediction residual of said current macroblock and being adapted for entropy encoding it;

- means being adapted for carrying out for bi-directionally predictively coding pictures the following functions:

-- based on the corresponding standard deviation value of intra prediction mode, calculating for each current macroblock a preliminary quantisation parameter using a distortion model from Laplace distribution model;

-- performing for said current macroblock a motion estimation/compensation using rate distortion optimisation processing with said preliminary quantisation parameter value, whereby an actual standard deviation value and a best coding mode is obtained for the macroblocks;

-- performing for said current macroblock a motion compensation using said best coding mode, and forming a residual macroblock;

-- based on said residual macroblock, calculating a second quantisation parameter using said actual standard deviation value and said distortion model from Laplace distribution model;

-- transforming said residual macroblock into the frequency domain and quantising it using said second quantisation parameter;

-- entropy coding the transformed and quantised residual macroblock.

Advantageous additional embodiments of the invention are disclosed in the respective dependent claims.

Drawings

Exemplary embodiments of the invention are described with reference to the accompanying drawings, which show in:

Fig. 1    Laplacian distortion distribution;
Fig. 2    dyadic hierarchical coding structure with four temporal levels;
Fig. 3    distortion as a function of σ for uniform, real and simulated distortion;
Fig. 4    SVC rate control flow diagram;
Fig. 5    encoder block diagram.

Exemplary embodiments

When investigating techniques for scalable video coding it turned out that coding structures using motion compensated temporal filtering (MCTF) lead to an improved coding efficiency as compared to a coding with the well-known I,B,B,P,... structure. The MCTF (cf. "MCTF and Scalability Extension of H.264/AVC and its Application to Video Transmission, Storage, and Surveillance", R.Schafer, H.Schwarz, D.Marpe, Th.Schierl, Th.Wiegand, Fraunhofer Institute for Telecommunications - Heinrich Hertz Institute (HHI), Image Processing Department, Berlin, Germany, published under the Internet address http://ip.hhi.de/imagecom_G1/assets/pdfs/ VCIP05_SVC.pdf) is based on a lifting scheme which allows computing a wavelet transform in an efficient manner and which achieves a perfect reconstruction of the input signal in the absence of quantisation of the wavelet coefficients. A further analysis of MCTF shows that the major part of the reported gains comes from the hierarchical coding structure, but not from the additional motion-compensated updating steps that are performed in the MCTF extension. In fact, the open-loop encoder control and the constrained intra prediction do not improve the coding efficiency. Quite the contrary is the case, since with unconstrained intra prediction and a closed-loop encoder control the coding efficiency can further be improved.

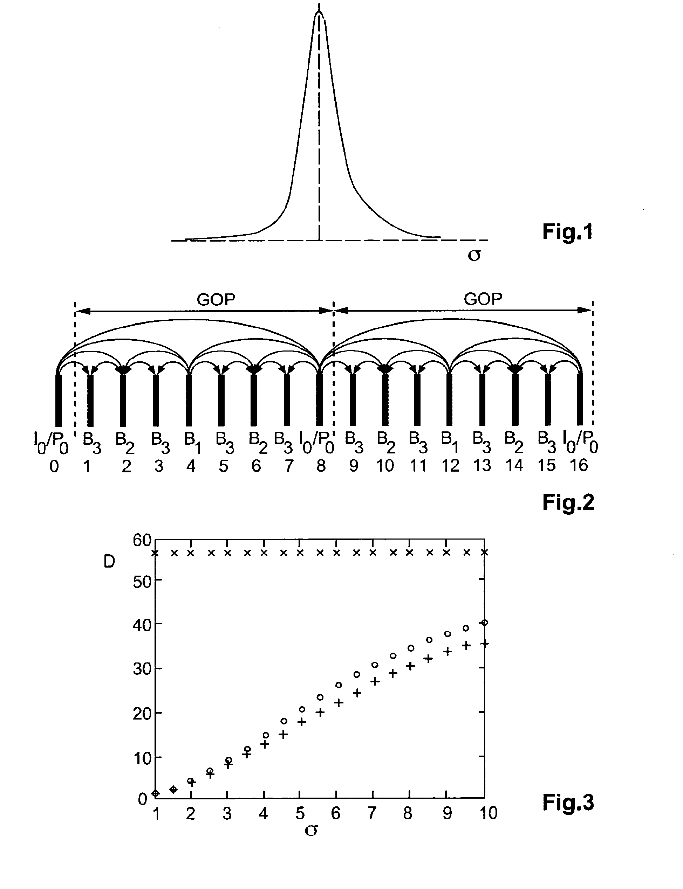

A closed-loop coding with hierarchical B pictures for single-layer is depicted in Fig. 2. The hierarchical B coding framework is a pyramid structure, while the MCTF-based coding is just a reverse pyramid structure. In Fig. 1 two GOPs are shown in picture display order '0' to '16', the GOPs having a size '8' and including an intra-coded or inter-P-coded frame $I_0/P_0$ and seven inter-B-coded pictures. The B frames have three different temporal levels $B_1$ to $B_3$. Each B picture of a lower temporal level (e.g. $B_3$ with display order 3) is predicted using two reference pictures from the past and the future, which are the nearest pictures (e.g. $B_2$ with display order 2 and $B_1$ with display order 5) of a higher temporal level. The last intra-coded or inter-P-coded frame in the previously coded GOP (or the first in the current GOP) is used as an anchor frame for the current GOP. The I and P pictures form so-called low-pass subbands, whereas the B pictures form so-called high-pass subbands in which (motion compensated) prediction of every other B picture from the intermediate B pictures can be used, followed by adding the (motion compensated) prediction error picture to the corresponding intermediate picture (cf. the above HHI publication) .

*Laplace distribution distortion model*

In the inventive bit rate control the TMN8 model with a new distortion model incorporated instead of the original uniform distortion model is used. The new distortion model is based on investigations that the distribution of the intra and the inter DCT coefficient magnitudes in codecs like MPEG2, MPEG4, and MPEG4-AVC approximates a Laplacian distribution, while the corresponding original distortion modes were always based on the hypothesis that the distribution of the DCT coefficient magnitudes conforms to a uniform distribution. A corresponding comparison between Laplacian distortion distribution, simulated Laplace distortion distribution and uniform distortion distribution is depicted in Fig. 3 in which, for quantiser step size $Q = 26$, the distortion $D$ is shown as a function of σ. The 'x' signs represent the uniform distortion, the 'o' signs represent the real distortion and the '+' signs represent the inventive distortion simulation. The $D$ value for the uniform distortion results from $Q = 26$, $Q^2/12 = 56.3$ .

The Laplace distribution distortion bit rate control processing is carried out as described below. The probability density function (PDF) of Laplace as depicted in Fig. 1 can be described as

$$f_y(y) = \frac{1}{\sqrt{2}\sigma} e^{-\frac{\sqrt{2}}{\sigma}|y|} \quad , \qquad\qquad (1)$$

where σ is the standard deviation (i.e. the square root of the standard variance) of the prediction residue within a block of transform coefficients and y is the transform coefficient. Practical experiments with different source video sequences show that the distribution of transform (e.g. DCT transform) coefficient magnitudes (including intra and inter transform coefficients) in any codec like MPEG2-2, MPEG4-2, and MPEG4 AVC approximates the Laplace distribution. Generally, the mean squared error has been used as the theory distortion which can be described as follows:

$$D_{Theory} \approx \sigma^2 \left(\frac{Q^2}{12\sigma^2 + Q^2}\right) \qquad\qquad (2)$$

In the original TMN8 model, the quantisation step size $Q^*_i$ for the *i*-th macroblock in a frame is calculated as:

$$Q_i^* = \sqrt{\frac{AK}{\beta_i - AN_iC}} \; \frac{\sigma_i}{\alpha_i} \; \sum_{k=1}^{N} \alpha_k \sigma_k, \qquad\qquad (3)$$

where $A$ is the number of pixels in a macroblock, $K$ is a distortion model parameter, $\beta_i$ is the number of bits left for encoding the current frame whereby $\beta_1=B$ is set at the initialisation stage and $B$ is the total number of target bits for encoding the frame, $N_i$ is the number of macroblocks that remain to be encoded in the frame whereby $N$ is the number of macroblocks per frame, $C$ is the overhead bit rate, $\sigma_i$ is the standard deviation of the residuum in the $i$-th macroblock, and $\alpha_i$ is the distortion weight of the transform coefficient coding/decoding errors in the $i$-th macroblock.

According to the invention, the TMN8 bit rate control is modified according to formula (4) for calculating the quantisation step size $Q_i^*$ for the $i$-th macroblock in the frame. Advantageously, formula (4) has the same computational complexity as formula(3), however, its bit rate control accuracy is better than that of formula (3):

$$Q_i^* = \sqrt{\frac{12*\sigma_i^2 AK \sum_{k=1}^{N} \alpha_k \sigma_k}{\alpha_i \sigma_i [12(\beta_i - AN_iC) + AKN] - AK \sum_{k=1}^{N} \alpha_k \sigma_k}} \qquad\qquad (4)$$

From this quantisation step size $Q^*i$ the quantisation parameter value QP is derived by e.g. using a look-up table. However, in the practical application a negative denominator in equation (4) leads to a deterioration of the model. Therefore, in case a negative denominator occurs, the original uniform distribution distortion model and the corresponding equation (3) are used to compute $Q^*i$ and thereby $QP_i$. Whether or not a negative denominator is occurring can be checked by comparing the difference in the denominator to zero. The resulting effect is: if the coding or picture content complexity of the current macroblock is far higher than the average macroblock complexity, it is momentarily switched to the uniform distribution distortion model bit rate control.

Experiments have shown that advantageously these two different distortion models work together fine and in a complementary way.

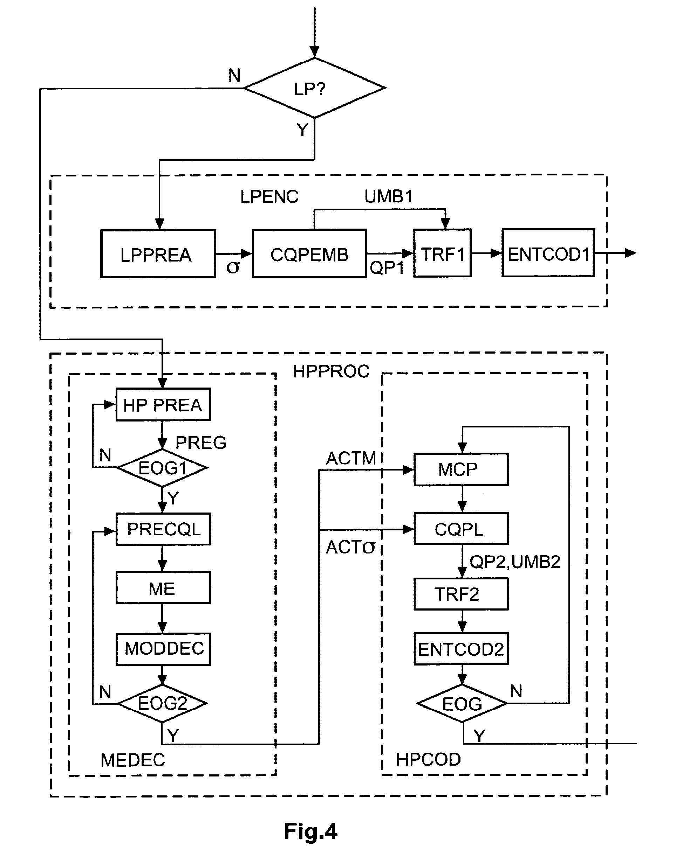

In Fig. 4, before encoding a picture, it is determined in step/stage LP whether or not it is to be low-pass encoded or high-pass encoded. The I and P frames of the current GOP form the low-pass encoded pictures whereas the B frames of the current GOP form the high-pass encoded pictures.

For the low-pass encoding LPENC, a pre-analysis step/stage LPPREA calculates the standard deviation (or the standard variance $\sigma^2$) of the input signal amplitudes for each macroblock in all I and P frames of the current GOP. Using the corresponding standard deviation or variance information determined in the pre-analysis step or stage, in a motion estimation/compen-sation (16x16 block based motion estimation) or prediction step or stage CQPEMB the best mode for the P frame MBs and the quantisation parameter QP and thereby the quantisation step size for each MB is computed, whereby a rate distortion optimisation processing (RDO) using the distortion model from Laplace distribution is performed. For I frames, an intra prediction is carried out in step or stage CQPEMB by which the best prediction mode and the standard deviation of the prediction residual for the MBs and the quantisation parameter QP are obtained, and an RDO processing on MB basis using the distortion model from Laplace distribution is performed. For I and P frames, the corresponding QP1 values and the corresponding residuals, i.e. macroblock update data (i.e. the parameters of the TMN8 model) UMB1, are then fed to a first transform coding step/ stage TRF1 for transforming the current data block into the frequency domain and quantising the transform coefficients according to QP. The transformed and quantised macroblock data are thereafter entropy encoded in a first entropy coder step/stage ENTCOD1. The low-pass encoded data for the current GOP are output. The low-pass encoded data can also be output MB by MB or frame by frame.

In case of high-pass processing HPPROC (for pictures No. 1-7 in Fig. 2), a pre-analysis step/stage HPPREA calculates a preliminary standard deviation (or preliminary standard variance $PRE\sigma 2$) of the input signal amplitudes in each macroblock for all B frames in the current GOP. For each macroblock it is checked in step/stage EOG1 whether or not the end of the current GOP has been reached. If not true (N), the following MB is processed in step/stage HPPROC. If true, from the preliminary standard deviation (or preliminary standard variance $PRE\sigma 2$) corresponding preliminary QP values (first-pass QP) are calculated in step/stage PRECQPL using TNN8 with the distortion model from Laplace distribution. Thereafter in step/stage ME a motion estimation is carried out for each macroblock. Preferably, the number of bits used for each MB after coding it is updated. However, the precise number of bits used for an MB coding is unavailable in the motion estimation stage. Therefore the number of bits used for coding in the corresponding 16x16 block mode is used as an approximation. In a following mode decision step/stage MODDEC using RDO processing, the best coding mode and the actual standard deviation or variance is calculated for the macroblocks, based on the motion information from step/stage ME and the preliminary QP value from step/stage PRECQPL.

For each macroblock it is checked in step/stage EOG2 whether or not the end of the current GOP has been reached. If not true (N), the following MB is processed in step/stage PRECQPL. If true, following the processing in the motion estimation and decomposition section MEDEC, the actual modes information ACTM is fed (MB by MB) to a motion compensation step/stage MCP (for prediction) in a high-pass encoding section HPCOD, and is used there to form a residual with the motion vector from the current macroblock, and the actual standard deviation (or standard variance ACTσ2) value and the predicted macroblock data are fed (MB by MB) to a Laplace model QP computing step/stage CQPL. The resulting actual QP2 value for the macroblock and the corresponding residual, i.e. the macroblock update data (i.e. the parameters of the TMN8 model) UMB2, are then fed to a second transform coding step/stage TRF2 for transforming the current input block residual into the frequency domain and quantising the transform coefficients using QP2. The transformed and quantised residual macroblock data are entropy encoded in a second entropy coder second step/stage ENTCOD2.

Thereafter it is checked in step/stage EOG whether or not the end of the current GOP has been reached. If not true, the processing continues for the following macroblock in step/stage MCP. If true, the high-pass encoded data for the current GOP are ready. The high-pass encoded data can also be output MB by MB or frame by frame.

The transform coding steps/stages TRF1 and TRF2 may each comprise a separate transform coding step/stage and quantisation step/stage. The first and second transform coding steps/stages TRF1 and TRF2, and/or the first and second entropy coder second steps/stages ENTCOD1 and ENTCOD2 may be combined steps or stages. The pre-analysis steps/stages LPPREA and HPPREA may be processed in a common step or stage.

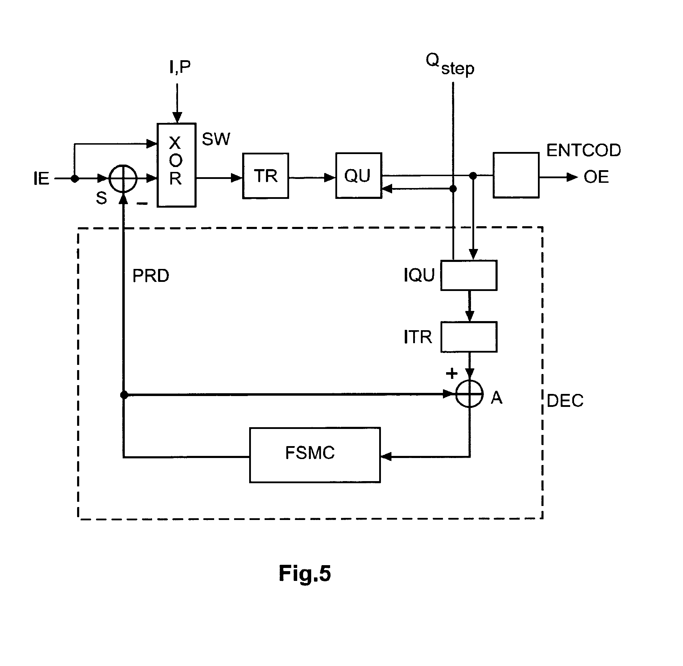

In Fig. 5 the video data input signal IE includes block or macroblock data to be encoded. In case intraframe (I) data are to be encoded, subtractor S passes the video input data via a transformer TR (computing e.g. a DCT transform) and a quantiser Q to an entropy encoder ENTCOD that delivers the encoder video data output signal OE.

In case interframe (P, B), i.e. non-intra frame, data are to be encoded, subtractor S subtracts predicted block or macroblock data PRD from the input signal IE and passes the difference data via transformer TR and quantiser Q to entropy encoder ENTCOD. The switching between the intraframe and interframe modes is carried out by a corresponding switch SW that may be implemented by an XOR function.

The output signal of Q is also fed to an inverse quantiser IQU, the output signal of which passes through an inverse transformer ITR to an adder A and represents reconstructed block or macroblock difference data. The output signal of adder A is intermediately stored in frame store and motion compensation means FSMC which also perform motion compensation on reconstructed block or macroblock data and which deliver such predicted block or macroblock data PRD to subtractor S and to the other input of adder A.

Quantiser Q and inverse quantiser IQU are controlled by the current quantiser step size Qstep (corresponding to Q*i in formulas (4) and (3) as described above) that is derived from the QP value. Inverse quantiser IQU, inverse transformer ITR and frame store and motion compensation means FSMC represent a decoder DEC.

*Pre-analysis in high-pass subband coding*

There are two temporal decomposition strategies in the current JSVM framework, closed-loop coding with hierarchical B pictures (as described above) and optional open-loop coding with motion compensated temporal filtering (MCTF) which works in a similar way for the high-pass subbands. The intra-coded subband, which is positioned in the top of the pyramid, is coded firstly in the closed-loop coding structure, while the opposite is true for the MCTF-based coding structure. No motion estimation is involved, therefore the above-described parameters updating and the QP selection is optimised for the intra-coded pictures. While for the hierarchical B pictures and the inter-P coded pictures the QP obtained in the above-described strategy is used just for the RDO, the optimised QP of each MB is to be determined further in this stage. Firstly, with the initial QP, RDO is implemented and the resulting optimised mode of each MB can be obtained, the actual $\sigma^2$ value and the number of bits actually used of each MB can be determined subsequently. With these precise information for each MB, the optimised QP can be obtained for the current MB using the TMN8 model.

The experiments have shown that the inventive bit rate control works fine for both, MCTF-based and hierarchical B pictures coding structures, in connection with RDO in the motion estimation stage for the high-pass subbands and the improved TMN8 model.

The invention can also be applied to field-based encoding.

Unless otherwise noted, the term 'macroblock' (of e.g. size 16*16 pixels or coefficients) may also mean 'block' (of e.g. size 8*8 pixels or coefficients), whereby several luminance blocks (e.g. four) are arranged in a luminance or a luminance/chrominance macroblock.

**Claims**

1. Method of bit rate control for a scalable video signal (IE) encoding using a Rate-Distortion optimisation for said bit rate control, the pictures of which video signal are divided into a grid of pixel macroblocks, wherein the pixels in a macroblock are transformed (TR), quantised (QU), inverse quantised (IQU) and inverse transformed (ITR), and wherein the picture encoding types include bi-directionally predictively coded (B) and intra coded (I) and/or predictively coded (P), **characterised by** the following steps carried out for a current group of pictures (GOP) of said video signal:

 - pre-analysing (LPPREA, HPPREA) pixel macroblocks in said current group of pictures (GOP) of said video signal by calculating their standard deviation ($\sigma$) values;
 - for predictively coding (P) pictures, based on the corresponding standard deviation value ($\sigma$), performing (CQPEMB) for each current macroblock a motion estimation and compensation and determining a best coding mode and a first quantisation parameter (QP1), thereby using a rate distortion optimisation processing (RDO) and a distortion model from Laplace distribution model;
 - for intra coding (I) pictures, based on the corresponding standard deviation value ($\sigma$) of intra prediction mode, determining (CQPEMB) for each current macroblock the best intra prediction mode and a first quantisation parameter (QP1), thereby using a rate distortion optimisation processing (RDO) and a distortion model from Laplace distribution model;
 - by using said best coding mode or intra prediction mode, respectively, and said first quantisation parameter (QP1), transforming (TRF1) and quantising the corresponding motion compensation or prediction residual of said current macroblock and entropy encoding (ENTCOD1) it;
 - for bi-directionally predictively coding (B) pictures:

 -- based on the corresponding standard deviation value ($\sigma$) of intra prediction mode, calculating (PRECQPL) for each current macroblock a preliminary quantisation parameter using a distortion model from Laplace distribution model;
 -- performing for said current macroblock a motion estimation/compensation (ME) using rate distortion optimisation (RDO) processing with said preliminary quantisation parameter value, whereby an actual standard deviation value (ACT$\sigma$) and a best coding mode (ACTM) is obtained for the macroblocks;
 -- performing (MCP) for said current macroblock a motion compensation using said best coding mode (ACTM), and forming a residual macroblock;
 -- based on said residual macroblock, calculating (CQPL) a second quantisation parameter (QP2) using said actual standard deviation value (ACT$\sigma$) and said distortion model from Laplace distribution model;
 -- transforming (TRF2) said residual macroblock into the frequency domain and quantising it using said second quantisation parameter (QP2);
 -- entropy coding (ENTCOD2) the transformed and quantised residual macroblock.

2. Bit rate control apparatus for scalable video signal (IE) encoding using a Rate-Distortion optimisation for said bit rate control, the pictures of which video signal are divided into a grid of pixel macroblocks, wherein the pixels in a macroblock are transformed (TR), quantised (QU), inverse quantised (IQU) and inverse transformed (ITR), and wherein the picture encoding types include bi-directionally predictively coded (B) and intra coded (I) and/or predictively coded (P), and wherein the processing is based on a current group of pictures (GOP) of said video signal, said apparatus including:

 - means (LPPREA, HPPREA) being adapted for pre-analysing pixel macroblocks in said current group of pictures (GOP) of said video signal by calculating their standard deviation ($\sigma$) values;
 - means (CQPEMB) being adapted for performing for predictively coding (P) pictures, based on the corresponding standard deviation value ($\sigma$), for each current macroblock a motion estimation and compensation and for determining the best coding mode and a first quantisation parameter (QP1), thereby using a rate distortion optimisation processing (RDO) and a distortion model from Laplace distribution model, and being adapted for determining for intra coding (I) pictures, based on the corresponding standard deviation value ($\sigma$) of intra prediction mode, for each current macroblock the best intra prediction mode and a first quantisation parameter (QP1), thereby using a rate distortion optimisation processing (RDO) and a distortion model from Laplace distribution model;
 - means (TRF1, ENTCOD1) being adapted for transforming and quantising by said first quantisation parameter (QP1), using said best coding mode or intra prediction mode, respectively, the corresponding motion compensation or prediction residual of said current macroblock and being adapted for entropy encoding it;

- means (PRECQPL, ME, MODDEC, MCP, CQPL, TRF2, ENTCOD2) being adapted for carrying out for bi-directionally predictively coding (B) pictures the following functions:

-- based on the corresponding standard deviation value ($\sigma$) of intra prediction mode, calculating for each current macroblock a preliminary quantisation parameter using a distortion model from Laplace distribution model;

-- performing for said current macroblock a motion estimation/compensation using rate distortion optimisation (RDO) processing with said preliminary quantisation parameter value, whereby an actual standard deviation value (ACT$\sigma$) and a best coding mode (ACTM) is obtained for the macroblocks;

-- performing for said current macroblock a motion compensation using said best coding mode (ACTM), and forming a residual macroblock;

-- based on said residual macroblock, calculating a second quantisation parameter (QP2) using said actual standard deviation value (ACT$\sigma$) and said distortion model from Laplace distribution model;

-- transforming said residual macroblock into the frequency domain and quantising it using said second quantisation parameter (QP2);

-- entropy coding the transformed and quantised residual macroblock.

3. Method according to claim 1, or apparatus according to claim 2, wherein said encoded video signal is an MPEG4-AVC SVC video signal.

4. Method according to claim 1 or 3, or apparatus according to claim 2 or 3, wherein the quantiser step size $Q^*_i$ for the i-th block or macroblock in a predicted picture is

$$Q^*_i = \sqrt{\frac{12 * \sigma^2_i AK \sum_{k=1}^{N} \alpha_k \sigma_k}{\alpha_i \sigma_i [12(\beta_i - AN_iC) + AKN] - AK \sum_{k=1}^{N} \alpha_k \sigma_k}} \quad,$$

wherein $A$ is the number of pixels in a macroblock, $K$ is a distortion model parameter, $\beta_i$ is the number of bits left for encoding the current frame whereby $\beta_1 = B$ is set at the initialisation stage and $B$ is the total number of target bits for encoding the frame, $N_i$ is the number of macroblocks that remain to be encoded in the frame whereby $N$ is the number of macroblocks per frame, $C$ is the overhead bit rate, $\sigma_i$ is the standard deviation of the residuum in the i-th macroblock, and $\alpha_i$ is the distortion weight of the transform coefficient coding/decoding errors in the i-th macroblock.

5. Method or apparatus according to claim 4 wherein, if for a current macroblock in the equation for quantiser step size $Q^*_i$ the denominator would become negative, the quantiser step size $Q^*_i$ for said current macroblock is instead

$$Q^*_i = \sqrt{\frac{AK}{\beta_i - AN_iC} \quad \frac{\sigma_i}{\alpha_i} \quad \sum_{k=1}^{N} \alpha_k \sigma_k} \quad.$$

6. Method according to one of claims 1 and 3 to 5, or apparatus according to one of claims 2 to 5, wherein said current group of pictures (GOP) comprises an intra coded (I) or a predictively coded (P) picture at its end or beginning, and several adjacent bi-directionally predictively coded (B) pictures.

7. A digital video signal that is encoded using the method of one of claims 1 and 3 to 6.

8. Storage medium, for example an optical disc, that contains or stores, or has recorded on it, a digital video signal that was encoded according to the method of one of claims 1 and 3 to 6.

Fig.1

Fig.2

Fig.3

**Fig.4**

**Fig.5**

European Patent
Office

**EUROPEAN SEARCH REPORT**

Application Number

EP 06 30 0201

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PING LI ET AL: "Buffer-constrained R-D Model-Based Rate Control for H.264/AVC" ACOUSTICS, SPEECH, AND SIGNAL PROCESSING, 2005. PROCEEDINGS. (ICASSP '05). IEEE INTERNATIONAL CONFERENCE ON PHILADELPHIA, PENNSYLVANIA, USA MARCH 18-23, 2005, PISCATAWAY, NJ, USA,IEEE, 18 March 2005 (2005-03-18), pages 321-324, XP010790641 ISBN: 0-7803-8874-7 * the whole document * | 1-8 | INV. H04N7/26 H04N7/50 |
| A | CHI-WAH WONG ET AL: "Piecewise Linear Model for Real-Time Rate Control" ACOUSTICS, SPEECH, AND SIGNAL PROCESSING, 2005. PROCEEDINGS. (ICASSP '05). IEEE INTERNATIONAL CONFERENCE ON PHILADELPHIA, PENNSYLVANIA, USA MARCH 18-23, 2005, PISCATAWAY, NJ, USA,IEEE, 18 March 2005 (2005-03-18), pages 285-288, XP010790632 ISBN: 0-7803-8874-7 * the whole document * | 1-8 | |
| D,A | SCHAEFER R ET AL: "MCTF AND SCALABILITY EXTENSION OF H.264/AVC AND ITS APPLICATION TO VIDEO TRANSMISSION, STORAGE, AND SURVEILLANCE" PROCEEDINGS OF THE SPIE, SPIE, BELLINGHAM, VA, US, vol. 5960, no. 1, 2005, pages 343-354, XP008065031 ISSN: 0277-786X * the whole document * | 1-8 | TECHNICAL FIELDS SEARCHED (IPC) H04N |

-/--

The present search report has been drawn up for all claims

| Place of search | Date of completion of the search | Examiner |
|---|---|---|
| The Hague | 8 August 2006 | Georgiou, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 06 30 0201

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | REICHEL J, SCHWARZ H, WIEN M: "Joint Scalable Video Model JSVM-4" JOINT VIDEO TEAM (JVT) OF ISO/IEC MPEG & ITU-T VCEG (ISO/IEC JTC1/SC29/WG11 AND ITU-T SG16 Q6), 18 November 2005 (2005-11-18), pages 1-41, XP002393742 * paragraphs [01.1], [01.4], [02.1], [02.6] * ----- | 1-8 | |
| A | WIEGAND T ET AL: "Lagrange multiplier selection in hybrid video coder control" PROCEEDINGS 2001 INTERNATIONAL CONFERENCE ON IMAGE PROCESSING. ICIP 2001. THESSALONIKI, GREECE, OCT. 7 - 10, 2001, INTERNATIONAL CONFERENCE ON IMAGE PROCESSING, NEW YORK, NY : IEEE, US, vol. VOL. 1 OF 3. CONF. 8, 7 October 2001 (2001-10-07), pages 542-545, XP010563403 ISBN: 0-7803-6725-1 * the whole document * ----- | 1-8 | |
| A | JIANFENG XU ET AL: "A novel rate control for H.264" CIRCUITS AND SYSTEMS, 2004. ISCAS '04. PROCEEDINGS OF THE 2004 INTERNATIONAL SYMPOSIUM ON VANCOUVER, BC, CANADA 23-26 MAY 2004, PISCATAWAY, NJ, USA,IEEE, US, 23 May 2004 (2004-05-23), pages III-809, XP010719387 ISBN: 0-7803-8251-X * the whole document * ----- -/-- | 1-8 | |

TECHNICAL FIELDS SEARCHED (IPC)

The present search report has been drawn up for all claims

| Place of search | Date of completion of the search | Examiner |
|---|---|---|
| The Hague | 8 August 2006 | Georgiou, G |

EPO FORM 1503 03.82 (P04C01)

European Patent
Office

**EUROPEAN SEARCH REPORT**

Application Number

EP 06 30 0201

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | RIBAS-CORBERA J ET AL: "RATE CONTROL IN DCT VIDEO CODING FOR LOW-DELAY COMMUNICATIONS" IEEE TRANSACTIONS ON CIRCUITS AND SYSTEMS FOR VIDEO TECHNOLOGY, IEEE SERVICE CENTER, PISCATAWAY, NJ, US, vol. 9, no. 1, February 1999 (1999-02), pages 172-185, XP000802296 ISSN: 1051-8215 * the whole document * | 1-8 | |
| A | CHI-WAH WONG ET AL: "Novel H.26X optimal rate control for low-delay communications" INFORMATION, COMMUNICATIONS AND SIGNAL PROCESSING, 2003 AND FOURTH PACIFIC RIM CONFERENCE ON MULTIMEDIA. PROCEEDINGS OF THE 2003 JOINT CONFERENCE OF THE FOURTH INTERNATIONAL CONFERENCE ON SINGAPORE 15-18 DEC. 2003, PISCATAWAY, NJ, USA,IEEE, vol. 1, 15 December 2003 (2003-12-15), pages 90-94, XP010702146 ISBN: 0-7803-8185-8 * the whole document * | 1-8 | |
| A | SCHWARZ H ET AL: "Scalable Extension of H.264/AVC" ISO/IEC JTC1/CS29/WG11 MPEG04/M10569/S03, XX, XX, March 2004 (2004-03), pages 1-39, XP002340402 * paragraphs [04.2], [04.3], [04.4] * | | TECHNICAL FIELDS SEARCHED (IPC) |

The present search report has been drawn up for all claims

| Place of search | Date of completion of the search | Examiner |
|---|---|---|
| The Hague | 8 August 2006 | Georgiou, G |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *ITU-T, Video codec Test model,* June 1997
- **J.RIBAS-CORBERA ; S.LEI.** Rate Control in DCT Video Coding for Low-Delay Communications. *IEEE Trans. on CSVT,* February 1999, vol. 9 (1

- **R.SCHAFER ; H.SCHWARZ ; D.MARPE ; TH.SCHIERL ; TH.WIEGAND.** MCTF and Scalability Extension of H.264/AVC and its Application to Video Transmission, Storage, and Surveillance. *Fraunhofer Institute for Telecommunications - Heinrich Hertz Institute (HHI), Image Processing Department,* http://ip.hhi.de/imagecom_G1/assets/pdfs/ VCIP05_SVC.pdf